# EUROPEAN PATENT SPECIFICATION

(11) **EP 4 435 613 B1**
(45) Date of publication and mention of the grant of the patent: **23.09.2026**
(21) Application number: 24164257.8
(22) Date of filing: 18.03.2024
(51) Int. Cl.: G06F 12/0868

(54) **AUTONOMOUS COPY BETWEEN EXTERNAL MEMORY AND INTERNAL MEMORY**
AUTONOME KOPIE ZWISCHEN EINEM EXTERNEN SPEICHER UND EINEM INTERNEN SPEICHER
COPIE AUTONOME ENTRE UNE MÉMOIRE EXTERNE ET UNE MÉMOIRE INTERNE

(30) Priority: 24.03.2023 US 202363491965 P; 09.01.2024 US 202418407990
(43) Date of publication of application: 25.09.2024
(73) Proprietor: MEDIATEK INC., Hsinchu City 30078 (TW)
(72) Inventor: KUO, Pao-Hung, Hsinchu City (TW); FAN, Po-Chun, Hsinchu City (TW); YANG, Sheng-Yen, Hsinchu City (TW)
(74) Representative: Hoefer & Partner Patentanwälte mbB

(56) References cited:
- US-A1- 2018 300 236
- US-A1- 2022 382 452

## Description

### TECHNICAL FIELD

Aspects of the technology relate to memory access in an application programming interface (API) and, more particularly, to autonomous copy between external memory and internal memory.

### BACKGROUND

Any software that performs a function may be regarded as an application. When applications interact with each other, an API simplifies the integration between the applications and facilitates seamless communication. APIs provide security by isolating the infrastructure of each of the applications being interfaced via the API. Data transfer between the two applications is a core function of an API. Thus, latency (i.e., time delay) between a request for information by one of the applications and delivery of that information is a consideration in the design of APIs.

US 2018/0300236 A1 discloses an access request processing method according to the preamble of claim 1 and a corresponding computer system according to the preamble of claim 8.

### SUMMARY

A method and a system according to the invention are defined in the independent claims. The dependent claims define preferred embodiments thereof. According to one or more embodiments, a method of managing access to a first memory is via a second memory. Access to the first memory is at a first speed and the first memory includes a first plurality of data blocks. Access to the second memory is at a second speed, different from the first speed, and the second memory includes a second plurality of data blocks. The method includes autonomously copying data from one or more of the data blocks in the first plurality of data blocks in the first memory to corresponding one or more of the data blocks in the second plurality of data blocks in the second memory sequentially. The method also includes receiving a command for reading from the second memory.
Responsive to receiving the command for reading from the second memory, the method includes obtaining a pointer indicating an address of a data block in the second memory that contains data copied from the first memory and that is first available for access, and obtaining the data from the data block based on the pointer.

According to another embodiment, a system includes an internal memory, and one or more processors to access an external memory via the internal memory. Access to the first memory is at a first speed and the first memory includes a first plurality of data blocks. Access to the second memory is at a second speed, different from the first speed, and the second memory includes a second plurality of data blocks. The one or more processors autonomously copy one or more of the data blocks in the plurality of data blocks in the external memory to corresponding data blocks in the internal memory. The one or more processors also receive a command for reading from the internal memory. Responsive to receiving the command for reading from the internal memory, the one or more processors obtain a pointer indicating an address of a data block in the internal memory that contains data copied from the external memory and is available for access and obtaining the data from the data block based on the pointer.

The foregoing has outline some of the pertinent features of the disclosed subject matter. These features are merely illustrative.

### BRIEF DESCRIPTION OF THE DRAWINGS

In the drawings, each identical or nearly identical component that is illustrated in various figures is represented by a like reference character. For purposes of clarity, not every component may be labelled in every drawing. The drawings are not necessarily drawn to scale, with emphasis instead being placed on illustrating various aspects of the techniques and devices described herein.
FIG. 1 is a block diagram of an exemplary system that accesses data from an external memory according to some embodiments.
FIG. 2A illustrates an exemplary memory transfer scheme according to some embodiments.
FIG. 2B illustrates operations involved in the exemplary memory transfer scheme of FIG. 2A according to some embodiments.
FIG. 3A illustrates exemplary memory operations associated with copying data from an external memory to an internal memory and loading data from the internal memory to a processor according to some embodiments.
FIG. 3B illustrates exemplary memory operations associated with storing data from a processor to an internal memory and copying data from the internal memory to an external memory according to some embodiments.
FIG. 4 is a process flow of a method of controlling memory operations associated with copying data from an external memory to an internal memory and retrieving data from the internal memory by one or more processors according to some embodiments.
FIG. 5 is a process flow of a method of controlling memory operations associated with storing data from one or more processors in an internal memory and copying data from the internal memory to an external memory according to some embodiments.

### DETAILED DESCRIPTION

Reference will now be made to the drawings to describe the present disclosure in detail. It will be understood that the drawings and exemplified embodiments are not limited to the details thereof. Modifications may be made without departing from the scope of the disclosed subject matter.

As noted, APIs facilitate seamless communication and data transfer between applications. Latency or delay time between a request for data by one of the applications and fulfilment of that request can affect the efficacy of an API based on the user experience created by the latency. A contributing factor in latency is the time it takes for a processor implementing the API functionality to transfer data from long-latency memory to fast memory. Long-latency memory (also called external memory or secondary memory) may generally be regarded as memory that is not directly connected to the processor implementing the API functionality, and fast memory (also called internal memory or primary memory) may be memory that is connected to and directly accessibly by the processor implementing the API functionality. Long-latency or secondary memory is accessible via the fast or primary memory. Some examples of long-latency memory include cloud storage, solid state drives, and optical disks, and some examples of fast memory include read-only memory (ROM), random access memory (RAM), and cache memory.

When the processor implementing the API functionality needs to load and use data that is stored in long-latency memory or write data into long-latency memory, the latency associated with transfer of that data between the long-latency memory and fast memory can be noticeable to a user of the API. At the same time, storage capacity of long-latency memory is typically larger than storage capacity of fast memory. Thus, all the data in long-latency memory may not be able to be moved to fast memory at once to make it all faster to access, for example. A prior approach to decreasing the latency in data access from long-latency memory involves moving a subset of data from the long-latency memory to fast memory to decrease the latency involved in accessing that subset of data. However, prior implementations of this approach may require tracking availability of storage in fast memory to determine when more data may be copied in from long-latency memory, as well as management of the memory addresses in fast memory. That is, as data is put into fast memory from long-latency memory, via program commands, and then released, a programmer of an API may need to include commands to calculate the memory addresses in the fast memory. This can be cumbersome.

Beneficially, any one or a combination of the approaches detailed herein facilitates automated copy of data from long-latency memory to fast memory whenever space is available in fast memory. The space may be referenced in units referred to as tiles or blocks, for example, and fast memory may include a one or two-dimensional array of tiles/blocks. In addition to the automated copy, the need for address determination and management may be eliminated through the use of multiple pointers. This approach can hide the latency associated with access of data from the long-latency memory by making the data available in fast memory before it is needed by the processor while potentially avoiding the need to manage addresses. While APIs are specifically discussed for explanatory purposes, any application that requires access to secondary memory stores may benefit from aspects of the automated copy and pointer-based access detailed herein.

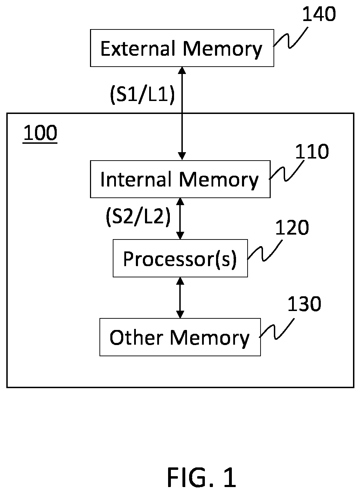

FIG. 1 is a block diagram of aspects of an exemplary system 100 having access to an external memory 140, according to some embodiments. The external memory 140 may be organized in a plurality of blocks or tiles, for example. The system 100 includes internal memory 110, which typically has a smaller storage capacity than the external memory 140. The internal memory 110 may also be organized in a plurality of blocks or tiles. The system 100 includes one or more processors 120 that can directly access the internal memory 110 but cannot directly access the external memory 140. An access speed S1 and latency L1 may be associated with transfer of data between the external memory 140 and internal memory 110. An access speed S2 and latency L2 may be associated with transfer of data between the one or more processors 120 and internal memory 110. The access speed S2 may be faster than S1. As such, the latency L2 may be smaller than L1, since access speed and latency are inversely proportional.

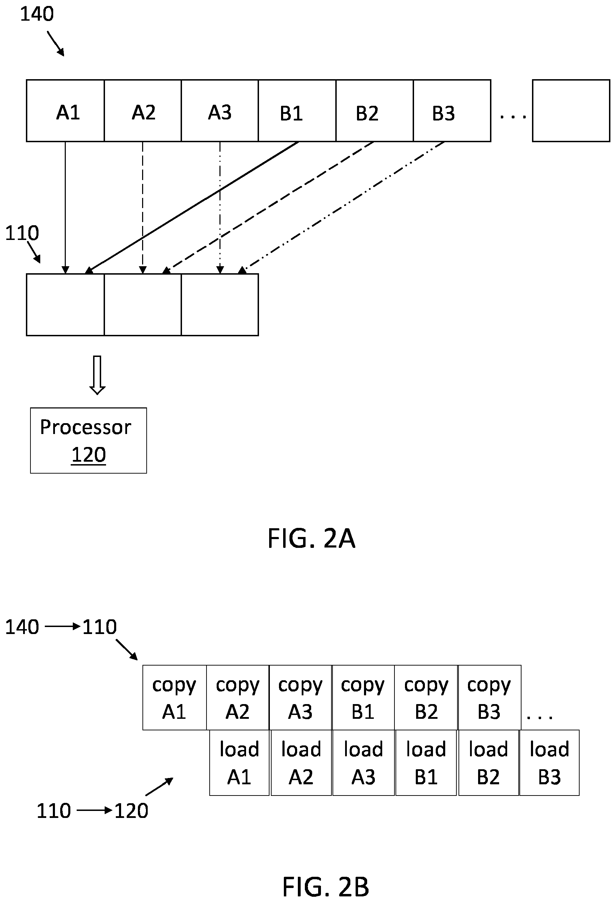

The system 100 may also include other memory 130. The other memory 130 may, for example, store instructions that cause the processor 120 to implement operations such as those of an API. The system 100 may also include other components that facilitate the functionality of the system 100. When one or more blocks of memory are unused in the internal memory 110, data is automatically copied from external memory 140 into the available blocks of internal memory 110. Instructions (e.g., stored in other memory 130) that are processed by one or more processors 120 may access data in internal memory 110 using a pointer that stores the address of the next readable block of data in internal memory 110 rather than by determining an address with which to access the data. Additional pointers may be used to determine whether an automatic copy may be implemented from external memory 140 to internal memory 110 and whether data in internal memory 110 has been loaded for use into one or more processors 120 such that the data may be released from internal memory 110 to accommodate an additional copy from external memory 140. The use of the pointers is discussed with reference to FIGs. 2A through 3B.

FIG. 2A illustrates an exemplary memory transfer scheme according to some embodiments. Exemplary blocks of external memory 140 are shown to include data indicated as A1-A3 and B1-B3. Exemplary internal memory 110 is shown to include three blocks. The exemplary illustrations are not intended to limit the arrangement or number of memory blocks of the external memory 140 or internal memory 110. For example, the memory blocks may be arranged in a two-dimensional array and may include any number of memory blocks.

As the arrows indicate, the three blocks of internal memory 110 are first respectively populated with data A1, A2, A3 via an automated copy from external memory 140 (i.e., data A1 is copied to the first block of internal memory 110, data A2 is copied to the second block, and data A3 is copied to the third block). As each block of the data is read out of internal memory 110 (i.e., loaded into the processor 120), an automated copy is performed to fill the block. For example, after data A1 is loaded into the processor 120 from the internal memory 110, the first block of internal memory 110 is populated with data B1 via an automated copy from external memory 140, as indicated by the arrow. After data A2 is loaded into the processor 120, the second block of internal memory 110 is populated with data B2 via an automated copy from external memory, and after data A3 is loaded into the processor 120, the third block of internal memory 110 is populated with data B3 via an automated copy from external memory.

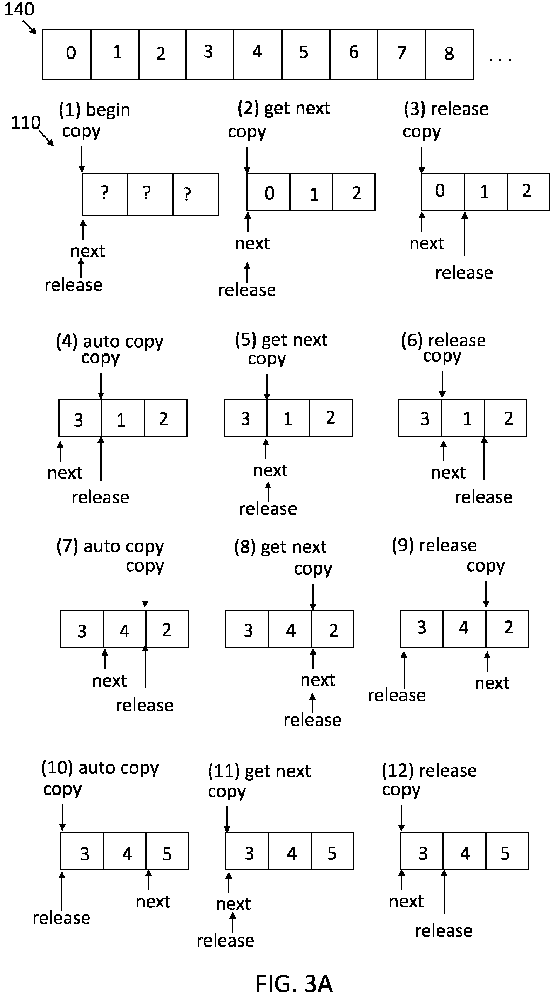

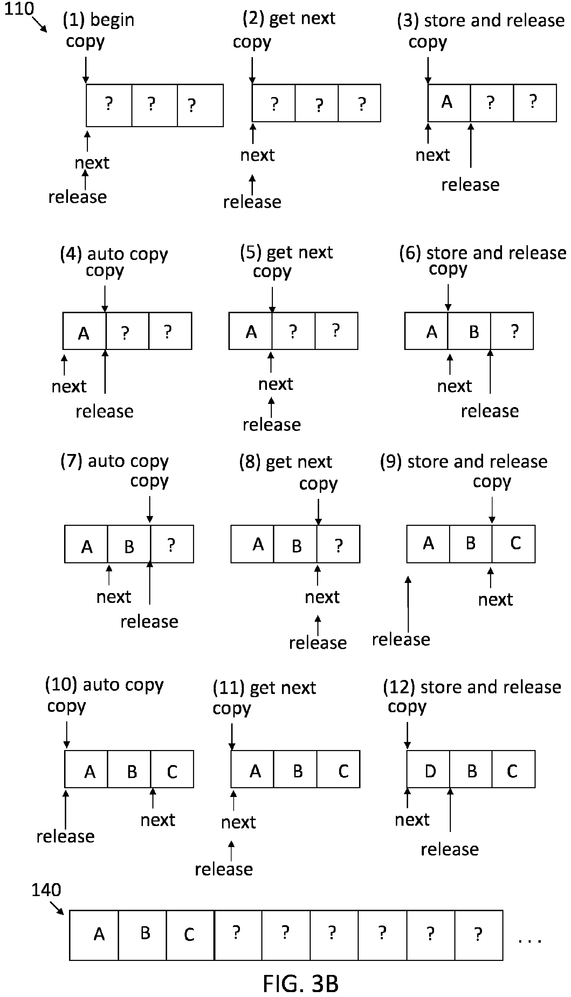

FIG. 2B illustrates operations involved in the exemplary memory transfer scheme of FIG. 2A according to some embodiments. FIG. 2B illustrates the sequential automated copy operations from external memory 140 to internal memory 110 and the load operations from internal memory 110 to the processor 120 that may be performed at least partially in parallel with the automated copy operations. As detailed with reference to FIGs. 3A and 3B, different pointers may be used to determine the next block of internal memory 110 data should be automatically copied into from external memory 140, the next block of internal memory 110 data may be read from or written to by the processor 120, and the next block of internal memory 110 that may be read from or copied into by the external memory 140.

FIG. 3A illustrates examples of memory operations associated with copying data from external memory 140 to internal memory 110 and loading data from the internal memory 110 to a processor 120 according to some embodiments. In the exemplary illustration, nine data blocks of the external memory 140 are indicated and the internal memory 110 is shown to include three memory blocks. As previously noted, this exemplary illustration does not limit the numbers and arrangements of memory blocks in external memory 140 and internal memory 110.

A sequence of snapshots of the internal memory 110 is numbered from "(1)" to "(12)". In each snapshot of the sequence, the locations of three pointers, "copy," "next," and "release," are indicated. The copy pointer stores the address of the next block of internal memory 110 that data can be copied into from external memory 140 and is automatically incremented each time an automated copy from external memory 140 to internal memory 110 is completed. Thus, at sequence (1), the copy pointer indicates the first block of internal memory 110. Between sequence (1) and sequence (2), an automated copy was performed to populate all three blocks of internal memory 110, as shown. Thus, the copy pointer is back to the beginning in sequence (2) to indicate the first block of internal memory 110 as the next block to automatically copy into again.

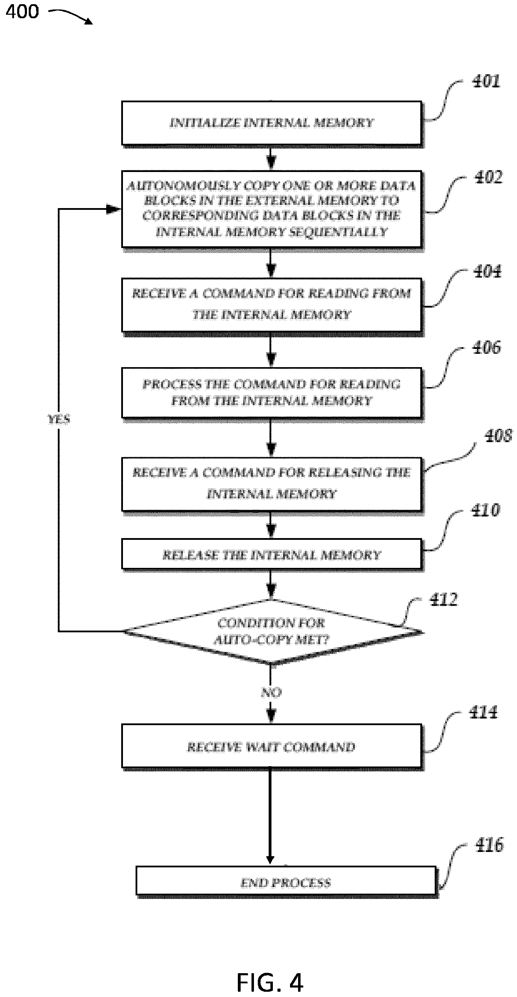

The next pointer may be used in program instructions (e.g., stored in other memory 130) to load data into internal memory 110 by one or more processors 120 or out of internal memory 110 to one or more processors 120 (e.g., into or out of blocks between the next pointer and the copy pointer). The release pointer may also be used in program instructions and specifies the block(s) of internal memory 110 available for automated copy (e.g., blocks between the copy pointer and the release pointer). Unlike the copy pointer, which is updated automatically following an automated copy, the next and release pointers are updated using program instructions. As exemplary illustrations in FIG. 3A indicate, an automated copy from external memory 140 to internal memory 110 is triggered by user control of the next and release pointers via program instructions. The headings of each of the sequences indicates an exemplary instruction that may be stored (e.g., in other memory 130) and processed by one or more processors 120. For example "get next" indicates an instruction to obtain the next block for reading or writing and "release" indicates an instruction to allow data to be overwritten. However, "auto copy" is not an instruction that is processed but, rather, an automated operation. As discussed with reference to FIG. 4, there may be checks associated with this instruction.

As FIG. 3A indicates, in the snapshots associated with sequences (2) to (3), (5) to (6), (8) to (9), and (11) to (12), the release pointer is incremented when data is loaded from a block of the internal memory 110 to the processor 120. That is, the next pointer, indicating the next block to load data from, and the release pointer initially point to the same block (e.g., as in sequence (2)), then the release pointer is incremented based on the load from the previously indicated block (e.g., as in sequence (3)). As the snapshots associated with sequences (3) to (4), (6) to (7), and (9) to (10) indicate, an automated copy is performed from external memory 140 to a released block in internal memory 110 and the copy pointer is automatically incremented following the copy.

As sequences (9) to (11) indicate, the pointers return to the first block after the third block in the exemplary internal memory 110 with three blocks. That is, the release pointer returns to the first block in sequence (9), the copy pointer returns to the first block in sequence (10), and the next pointer returns to the first block in sequence (11). Because the pointers cycle through the blocks in this manner, the internal memory 110 may preferably be illustrated and regarded as a circular ring buffer. As discussed with reference to FIG. 4, program code may be written to perform checks to ensure that only valid blocks or relevant error messages are obtained based on the positions of the pointers.

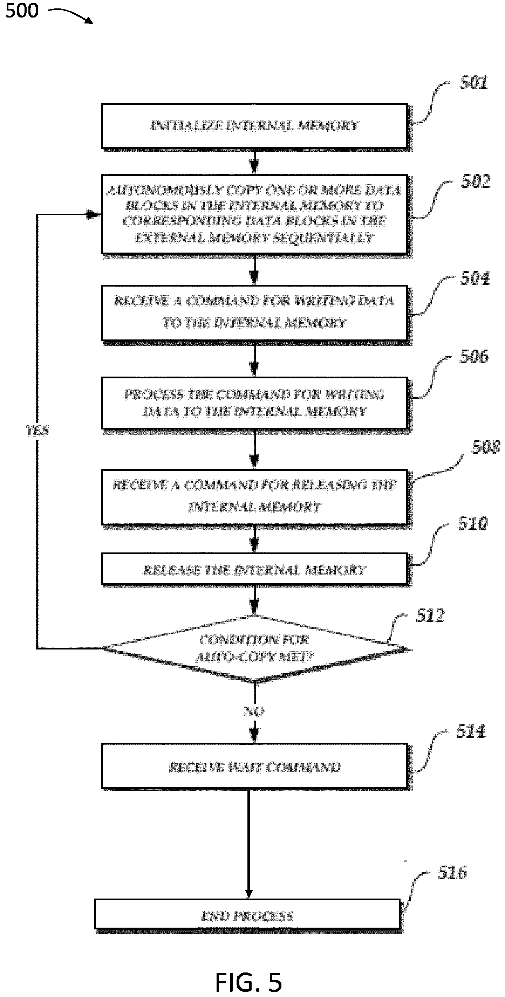

FIG. 3B illustrates examples of memory operations associated with storing data from the processor 120 to the internal memory 110 and copying data from the internal memory 110 to external memory 140 according to some embodiments. The exemplary illustration shows the nine data blocks of the external memory 140 and the internal memory 110 with three memory blocks as in FIG. 3A. Similarly to FIG. 3A, a sequence of snapshots of the internal memory 110 is numbered from "(1)" to "(12)". In each snapshot of the sequence, the locations of the copy, next, and release are indicated. The headings are the same as those in FIG. 3A with the exception of "store and release" to indicate that data is written from internal memory 110 into external memory 140 before the block is released. Additional details are discussed with reference to FIG. 5.

As FIG. 3B indicates, in the snapshots associated with sequences (2) to (3), (5) to (6), (8) to (9), and (11) to (12), the release pointer is incremented when data is written into a block of the internal memory 110 from the processor 120. That is, the next pointer, indicating the next block to write data into, and the release pointer initially point to the same block (e.g., as in sequence (2)), then the release pointer is incremented based on data being written into the previously indicated block (e.g., as in sequence (3)). As the snapshots associated with sequences (3) to (4), (6) to (7), and (9) to (10) indicate, an automated copy is performed into external memory 140 from internal memory 110 and the copy pointer is automatically incremented following the copy. As noted with reference to FIG. 3A, because the pointers cycle through the blocks, as illustrated in sequences (9), (10), and (11), for example, the internal memory 110 may preferably be illustrated and regarded as a circular ring buffer.

FIG. 4 is a process flow of a method 400 of controlling memory operations associated with copying data from external memory 140 to internal memory 110 and retrieving data from the internal memory 110 by one or more processors 120 according to some embodiments. The processes may be performed by a system 100. Aspects of the operations are illustrated in FIG. 3A. At 401, initializing internal memory 110 may include setting the copy, release, and next buffers to store the same address, that of the first block of the internal memory 110 (e.g., as shown for sequence (1) in FIG. 3A). At 402, autonomously copying one or more blocks of data from external memory 140 to internal memory 110 sequentially is illustrated in sequence (2) of FIG. 3A, for example.

At 404, receiving a command for reading from the internal memory 110 refers to one or more processors 120 receiving instructions (e.g., stored in other memory 130) associated with reading data from internal memory 110. At 406, processing the command for reading from internal memory 110 may involve determining that a valid block of data is indicated by the next pointer, for example, and may involve a set of commands. According to the invention, a command to obtain the next pointer is first issued to determine whether a valid block of data is available for access or if an error code is returned. One of more valid blocks of data for reading from internal memory 110 are blocks between the next pointer and copy pointer. Thus, if the next pointer and the copy pointer are in the same place, there are no valid blocks to read from. If the check at 406 passes, this may lead to one or more processors 120 then loading data from the internal memory 110. At 408, receiving a command for releasing the internal memory refers to one or more processors 120 implementing instructions to release a block or more of the internal memory 110, at 410, followed by incrementing the release pointer.

At 412, a check may be performed to determine if conditions for automated copy from external memory 140 to internal memory 110 are met. For example, a check may be performed of whether the address indicated by the copy pointer is the same as the address indicated by the release pointer. If the check at 412 indicates that the condition for automated copy is met (e.g., there is at least one block between the copy pointer and the release pointer), then another iteration beginning at 402 may be implemented. If, instead, the result of the check at 412 is that the condition for automated copy is not met, then the process of copying from external memory is ended. Because this is an asynchronous end, a (synchronous) command to wait may be received, at 414. That is, the instructions implemented by one or more processors 120 may include a wait instruction to wait synchronously until the corresponding asynchronous end is complete if the condition checked at 412 is not met. Following the wait, the process may be ended at 416. The end (at 416) may indicate a release of the internal memory 110 which may subsequently be re-initialized (at 401). The process at 414 may also be reached if the check that is part of the processing of the read command (at 406) indicates that a valid block is not available in internal memory 110.

FIG. 5 is a process flow of a method 500 of controlling memory operations associated with storing data from one or more processors 120 in internal memory 110 and copying data from internal memory 110 to external memory 140 according to some embodiments. Aspects of the operations are illustrated in FIG. 3B. Like the processes of the method 400, the processes of the method 500 may be performed by a system 100. At 501, initializing internal memory 110 may including setting the copy, release, and next buffers to store the same address, that of the first block of the internal memory 110 (e.g., as shown for sequence (1) in FIG. 3B). At 502, autonomously copying one or more blocks of data from internal memory 110 to external memory 140 sequentially is illustrated, for example, by the copy of "A" out of the first block of internal memory 110 at sequence (4) of FIG. 3B.

At 504, receiving a command for writing data to internal memory 110 from one or more processors 120 refers to the one or more processors 120 receiving instructions to write data into internal memory 110. At 506, processing the command for writing data to internal memory 110 may include verifying that a valid block of internal memory 110 is available. This verification may involve comparing the address of the next pointer, which indicates the address of a block of internal memory 110, to the address of the copy pointer to ensure that there is at least one block between the next pointer and the copy pointer. As previously noted, the circular access (e.g., first block is reached after the last block according to the arrangement in FIG. 3B) must be considered in performing this verification. That is, an address (e.g, first block address) that is past another address (e.g., last block address) may have a lower address value and an address (e.g., last block address) that precedes another address (e.g., first block address) may have a higher address value due to the circular scheme discussed with reference to FIGs. 3A and 3B. Thus, the copy pointer may have a lower address value than the next pointer when there is at least one block between the next pointer and the copy pointer. Based on the verification, one or more processors 120 may write data into one or more blocks of internal memory 110. At 508, receiving a command for releasing the internal memory refers to one or more processors 120 implementing instructions to release a block or more of the internal memory 110, at 510, followed by incrementing the release pointer.

At 512, a check may be performed to determine if conditions for automated copy from internal memory 110 to external memory 140 are met. This check may be similar to the one discussed with reference to 412 of the method 400 of FIG. 4, for example. The check is to determine whether there are one or more blocks between the copy pointer and the release pointer. Based on the result of the check at 512 indicating that the condition for automated copy is met, then another iteration beginning at 502 may be implemented. If, instead, the result of the check at 512 is that the condition for automated copy is not met, then a command to wait may be received, at 514, to address the asynchronous end of the process. Following the completion of the synchronous wait command, the process may be ended at 516.

Techniques operating according to the principles described herein may be implemented in any suitable manner. The processing and decision blocks of the flowcharts above represent steps and acts that may be included in algorithms that carry out these various processes. Algorithms derived from these processes may be implemented as software integrated with and directing the operation of one or more single- or multi-purpose processors, may be implemented as functionally equivalent circuits such as a DSP circuit or an ASIC, or may be implemented in any other suitable manner. It should be appreciated that the flowcharts included herein do not depict the syntax or operation of any particular circuit or of any particular programming language or type of programming language. Rather, the flowcharts illustrate the functional information one skilled in the art may use to fabricate circuits or to implement computer software algorithms to perform the processing of a particular apparatus carrying out the types of techniques described herein. For example, the flowcharts, or portion(s) thereof, may be implemented by hardware alone (e.g., one or more analog or digital circuits, one or more hardware-implemented state machines, etc., and/or any combination(s) thereof) that is configured or structured to carry out the various processes of the flowcharts. In some examples, the flowcharts, or portion(s) thereof, may be implemented by machine-executable instructions (e.g., machine-readable instructions, computer-readable instructions, computer-executable instructions, etc.) that, when executed by one or more single- or multi-purpose processors, carry out the various processes of the flowcharts. It should also be appreciated that, unless otherwise indicated herein, the particular sequence of steps and/or acts described in each flowchart is merely illustrative of the algorithms that may be implemented and can be varied in implementations and embodiments of the principles described herein.

Accordingly, in some embodiments, the techniques described herein may be embodied in machine-executable instructions implemented as software, including as application software, system software, firmware, middleware, embedded code, or any other suitable type of computer code. Such machine-executable instructions may be generated, written, etc., using any of a number of suitable programming languages and/or programming or scripting tools, and also may be compiled as executable machine language code or intermediate code that is executed on a framework, virtual machine, or container.

When techniques described herein are embodied as machine-executable instructions, these machine-executable instructions may be implemented in any suitable manner, including as a number of functional facilities, each providing one or more operations to complete execution of algorithms operating according to these techniques. A "functional facility," however instantiated, is a structural component of a computer system that, when integrated with and executed by one or more computers, causes the one or more computers to perform a specific operational role. A functional facility may be a portion of or an entire software element. For example, a functional facility may be implemented as a function of a process, or as a discrete process, or as any other suitable unit of processing. If techniques described herein are implemented as multiple functional facilities, each functional facility may be implemented in its own way; all need not be implemented the same way. Additionally, these functional facilities may be executed in parallel and/or serially, as appropriate, and may pass information between one another using a shared memory on the computer(s) on which they are executing, using a message passing protocol, or in any other suitable way.

Generally, functional facilities include routines, programs, objects, components, data structures, etc., that perform particular tasks or implement particular abstract data types. Typically, the functionality of the functional facilities may be combined or distributed as desired in the systems in which they operate. In some implementations, one or more functional facilities carrying out techniques herein may together form a complete software package. These functional facilities may, in alternative embodiments, be adapted to interact with other, unrelated functional facilities and/or processes, to implement a software program application.

Some exemplary functional facilities have been described herein for carrying out one or more tasks. It should be appreciated, though, that the functional facilities and division of tasks described is merely illustrative of the type of functional facilities that may implement using the exemplary techniques described herein, and that embodiments are not limited to being implemented in any specific number, division, or type of functional facilities. In some implementations, all functionalities may be implemented in a single functional facility. It should also be appreciated that, in some implementations, some of the functional facilities described herein may be implemented together with or separately from others (e.g., as a single unit or separate units), or some of these functional facilities may not be implemented.

Machine-executable instructions implementing the techniques described herein (when implemented as one or more functional facilities or in any other manner) may, in some embodiments, be encoded on one or more computer-readable media, machine-readable media, etc., to provide functionality to the media. Computer-readable media include magnetic media such as a hard disk drive, optical media such as a CD or a DVD, a persistent or non-persistent solid-state memory (e.g., Flash memory, Magnetic RAM, etc.), or any other suitable storage media. Such a computer-readable medium may be implemented in any suitable manner. As used herein, the terms "computer-readable media" (also called "computer-readable storage media") and "machine-readable media" (also called "machine-readable storage media") refer to tangible storage media. Tangible storage media are non-transitory and have at least one physical, structural component. In a "computer-readable medium" and "machine-readable medium" as used herein, at least one physical, structural component has at least one physical property that may be altered in some way during a process of creating the medium with embedded information, a process of recording information thereon, or any other process of encoding the medium with information. For example, a magnetization state of a portion of a physical structure of a computer-readable medium, a machine-readable medium, etc., may be altered during a recording process.

Further, some techniques described above comprise acts of storing information (e.g., data and/or instructions) in certain ways for use by these techniques. In some implementations of these techniques-such as implementations where the techniques are implemented as machine-executable instructions-the information may be encoded on a computer-readable storage media. Where specific structures are described herein as advantageous formats in which to store this information, these structures may be used to impart a physical organization of the information when encoded on the storage medium. These advantageous structures may then provide functionality to the storage medium by affecting operations of one or more processors interacting with the information; for example, by increasing the efficiency of computer operations performed by the processor(s).

In some, but not all, implementations in which the techniques may be embodied as machine-executable instructions, these instructions may be executed on one or more suitable computing device(s) and/or electronic device(s) operating in any suitable computer and/or electronic system, or one or more computing devices (or one or more processors of one or more computing devices) and/or one or more electronic devices (or one or more processors of one or more electronic devices) may be programmed to execute the machine-executable instructions. A computing device, electronic device, or processor (e.g., processor circuitry) may be programmed to execute instructions when the instructions are stored in a manner accessible to the computing device, electronic device, or processor, such as in a data store (e.g., an on-chip cache or instruction register, a computer-readable storage medium and/or a machine-readable storage medium accessible via a bus, a computer-readable storage medium and/or a machine-readable storage medium accessible via one or more networks and accessible by the device/processor, etc.). Functional facilities comprising these machine-executable instructions may be integrated with and direct the operation of a single multi-purpose programmable digital computing device, a coordinated system of two or more multi-purpose computing device sharing processing power and jointly carrying out the techniques described herein, a single computing device or coordinated system of computing device (co-located or geographically distributed) dedicated to executing the techniques described herein, one or more FPGAs for carrying out the techniques described herein, or any other suitable system.

Embodiments have been described where the techniques are implemented in circuitry and/or machine-executable instructions. It should be appreciated that some embodiments may be in the form of a method, of which at least one example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Various aspects of the embodiments described above may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

The phrase "and/or," as used herein in the specification and in the claims, should be understood to mean "either or both," of the elements so conjoined, e.g., elements that are conjunctively present in some cases and disjunctively present in other cases. Multiple elements listed with "and/or" should be construed in the same fashion, e.g., "one or more" of the elements so conjoined. Other elements may optionally be present other than the elements specifically identified by the "and/or" clause, whether related or unrelated to those elements specifically identified. Thus, as a non-limiting example, a reference to "A and/or B," when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

The indefinite articles "a" and "an," as used herein in the specification and in the claims, unless clearly indicated to the contrary, should be understood to mean "at least one."

As used herein in the specification and in the claims, the phrase, "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently, "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. A method of managing access to a first memory via a second memory, access to the first memory being at a first speed and the first memory comprising a first plurality of data blocks, access to the second memory being at a second speed, different from the first speed, and the second memory comprising a second plurality of data blocks, the method comprising:
autonomously copying data from one or more of the data blocks in the first plurality of data blocks in the first memory to corresponding one or more of the data blocks in the second plurality of data blocks in the second memory (402);
receiving a command for reading from the second memory (404);
responsive to receiving the command for reading from the second memory, obtaining a pointer; and
obtaining the data from the data block based on the pointer (406),
**characterized in that**
the data is autonomously copied from the one or more of the data blocks in the first memory to the corresponding one or more of the data blocks in the second memory sequentially,
the pointer indicates an address of a data block in the second memory that contains data copied from the first memory and that is first available for access, and
the obtaining the pointer comprises determining whether the data block in the second memory is available for access.

2. The method of claim 1, wherein the second speed is faster than the first speed; and/or
wherein the second memory is internal memory that is directly connected to one or more processors and the first memory is external memory not directly connected to the one or more processors.

3. The method of claim 1 or 2, wherein autonomously copying comprises performing one or more iterations of operations comprising:
using a copy pointer indicative of an address of a next data block in the second memory that is available to receive data from the first memory;
copying data from one of the first plurality of data blocks in the first memory to the next data block in the second memory; and
incrementing a value of the copy pointer.

4. The method of claim 3, wherein autonomously copying further comprises determining whether to stop the one or more iterations, by:
determining whether the copy pointer indicating the address of the next data block in the second memory that is available to receive data from the first memory is at an address indicated by a release pointer:
responsive to determining that the copy pointer indicates the address that is at the address indicated by the release pointer, stopping the one or more iterations; and
responsive to determining that the copy pointer indicates the address that is not at the address indicated by the release pointer, continuing the one or more iterations.

5. The method of claim 4, further comprising:
responsive to receiving the command for releasing the second memory, incrementing the release pointer.

6. The method of claim 4 or 5, further comprising initializing the second memory by setting the pointer, the copy pointer, and the release pointer to an initial location in the second memory, wherein preferably
initializing the second memory further comprises triggering the autonomously copying, and
the second memory includes a first data block and a last data block, and incrementing any of the pointer, the copy pointer, and the release pointer past the last data block of the second memory advances to the first data block of the second memory; and/or
further comprising:
determining whether a condition for auto-copy is met based on the copy pointer and the release pointer, and
responsive to determining that a condition for auto-copy is met, triggering the autonomously coping.

7. The method of any one of claims 1 to 6, further comprising:
a) responsive to receiving a wait command, determining whether an event is completed, and
responsive to determining that the event is completed, terminating the autonomously copying; and/or
b) autonomously copying one or more of the plurality of data blocks in the second memory to corresponding data blocks in the first memory,
receiving a command for writing data to the second memory,
responsive to receiving the command for writing to the second memory, obtaining the pointer indicating an address of a data block in the second memory that is available to store new data, and
writing the data as the new data in the data block based on the pointer.

8. A system (100) comprising:
an internal memory (110); and
one or more processors (120) configured to access an external memory (140) via the internal memory (110), access to the external memory (140) being at a first speed and the external memory (140) comprising a first plurality of data blocks, access to the internal memory (110) being at a second speed, different from the first speed, and the internal memory (110) comprising a second plurality of data blocks, the one or more processors (120) configured to:
autonomously copy one or more of the data blocks in the plurality of data blocks in the external memory (140) to corresponding data blocks in the internal memory (110);
receive a command for reading from the internal memory (110);
responsive to receiving the command for reading from the internal memory (110), obtain a pointer and obtaining the data from a data block in the internal memory based on the pointer,
**characterized in that**
the pointer indicates an address of the data block in the internal memory (110) that contains data copied from the external memory (140) and is available for access, and
the obtaining the pointer comprises determining whether the data block in the internal memory is available for access.

9. The system of claim 8, wherein the second speed is faster than the first speed.

10. The system of claim 8 or 9, wherein the one or more processors (120) are configured to perform one or more iterations of operations comprising:
using a copy pointer indicative of an address of a next data block in the internal memory (110) that is available to receive data from the external memory (140);
copying data in a corresponding data block of the plurality of data blocks in the external memory (140) to the next data block in the internal memory (110); and
incrementing the copy pointer.

11. The system of claim 10, wherein the one or more processors (120) are configured to determine whether to stop the one or more iterations, by:
determining whether the copy pointer indicating the address of the next data block in the internal memory (110) that is available to receive data from the external memory (140) meet or pass a release pointer;
responsive to determining that the copy pointer meet or pass the release pointer:
stopping the one or more iterations; otherwise
continuing the one or more iterations.

12. The system of claim 11, wherein the one or more processors (120) is further configured to:
receive a command for releasing memory;
responsive to receiving the command for releasing memory, incrementing the release pointer.

13. The system of claim 11 or 12, wherein the one or more processors (120) is further configured to initialize the internal memory (110) by setting the pointer, the copy pointer, and the release pointer to an initial location in the internal memory, and to trigger the autonomous copying; and/or
wherein the plurality of data blocks in the internal memory (110) are arranged in a data structure such that a first data block of the plurality of data blocks appends to a last data block of the plurality of data blocks in the internal memory (110), and the one or more processors incrementing any of the pointer, the copy pointer, and the release pointer past the last data block of the internal memory advances the any of the pointer, the copy pointer, and the release pointer to the first data block of the internal memory (110); and/or
wherein the one or more processors (120) is further configured, responsive to determining that the copy pointer meets an auto-copy condition, to trigger the autonomous coping.

14. The system of any one of claims 8 to 13, wherein the one or more processors (120) is further configured to:
autonomously copy one or more of the plurality of data blocks in the internal memory (110) to corresponding data blocks in the external memory (140);
receive a command for writing data to the internal memory (110);
responsive to receiving the command for writing to the internal memory (110), determine the pointer indicating the address of a data block in the internal memory (110) that is available to store new data; and
write the data as the new data in the data block based on the pointer.

15. The system of any one of claims 8 to 14, wherein the one or more processors (120) is configured to maintain the pointer indicating an address of a data block in the internal memory (110) that contains data copied from the external memory (140) and is available for access, a/the copy pointer indicating an address of a next data block in the internal memory (110) that is available to receive data from the external memory (140), and a/the release pointer indicating an address of a last data block in the internal memory (110) that is available to receive data from the external memory (140); and/or
wherein the plurality of data blocks in the internal memory (110) are logically arranged in an order, wherein a last data block in the internal memory (110) references a first data block in the internal memory (110) such that incrementing the pointer indicating the last data block in the internal memory (110) results in the pointer indicating the first data block in the internal memory (110).

## Patentansprüche

1. Verfahren zum Verwalten des Zugriffs auf einen ersten Speicher über einen zweiten Speicher, wobei der Zugriff auf den ersten Speicher mit einer ersten Geschwindigkeit erfolgt und der erste Speicher eine erste Vielzahl von Datenblöcken umfasst, wobei der Zugriff auf den zweiten Speicher mit einer zweiten Geschwindigkeit erfolgt, die sich von der ersten Geschwindigkeit unterscheidet, und der zweite Speicher eine zweite Vielzahl von Datenblöcken umfasst, wobei das Verfahren Folgendes umfasst:
autonomes Kopieren von Daten von einem oder mehreren der Datenblöcke in der ersten Vielzahl von Datenblöcken in dem ersten Speicher in entsprechende einen oder mehrere der Datenblöcke in der zweiten Vielzahl von Datenblöcken in dem zweiten Speicher (402);
Empfangen eines Befehls zum Lesen aus dem zweiten Speicher (404);
als Reaktion auf das Empfangen des Befehls zum Lesen aus dem zweiten Speicher, Erhalten eines Zeigers; und
Erhalten der Daten aus dem Datenblock basierend auf dem Zeiger (406),
**dadurch gekennzeichnet, dass**
die Daten autonom von dem einen oder den mehreren der Datenblöcke in dem ersten Speicher in die entsprechenden einen oder mehreren der Datenblöcke in dem zweiten Speicher sequentiell kopiert werden,
der Zeiger eine Adresse eines Datenblocks in dem zweiten Speicher angibt, der aus dem ersten Speicher kopierte Daten enthält und der zuerst für den Zugriff verfügbar ist, und
das Erhalten des Zeigers das Bestimmen umfasst, ob der Datenblock in dem zweiten Speicher für den Zugriff verfügbar ist.

2. Verfahren nach Anspruch 1, wobei die zweite Geschwindigkeit schneller als die erste Geschwindigkeit ist; und/oder
wobei der zweite Speicher ein interner Speicher ist, der direkt mit einem oder mehreren Prozessoren verbunden ist, und der erste Speicher ein externer Speicher ist, der nicht direkt mit dem einen oder den mehreren Prozessoren verbunden ist.

3. Verfahren nach Anspruch 1 oder 2, wobei das autonome Kopieren das Durchführen einer oder mehrerer Iterationen von Operationen umfasst, die Folgendes umfassen:
Verwenden eines Kopierzeigers, der eine Adresse eines nächsten Datenblocks in dem zweiten Speicher angibt, der verfügbar ist, um Daten aus dem ersten Speicher zu empfangen;
Kopieren von Daten von einem der ersten Vielzahl von Datenblöcken in dem ersten Speicher in den nächsten Datenblock in dem zweiten Speicher; und
Inkrementieren eines Werts des Kopierzeigers.

4. Verfahren nach Anspruch 3, wobei das autonome Kopieren ferner das Bestimmen umfasst, ob die eine oder die mehreren Iterationen gestoppt werden sollen, durch:
Bestimmen, ob der Kopierzeiger, der die Adresse des nächsten Datenblocks in dem zweiten Speicher angibt, der verfügbar ist, um Daten aus dem ersten Speicher zu empfangen, an einer Adresse ist, die durch einen Freigabezeiger angegeben wird:
als Reaktion auf das Bestimmen, dass der Kopierzeiger die Adresse angibt, die an der Adresse ist, die durch den Freigabezeiger angegeben wird, Stoppen der einen oder der mehreren Iterationen; und
als Reaktion auf das Bestimmen, dass der Kopierzeiger die Adresse angibt, die nicht an der Adresse ist, die durch den Freigabezeiger angegeben wird, Fortsetzen der einen oder der mehreren Iterationen.

5. Verfahren nach Anspruch 4, ferner umfassend:
als Reaktion auf das Empfangen des Befehls zum Freigeben des zweiten Speichers, Inkrementieren des Freigabezeigers.

6. Verfahren nach Anspruch 4 oder 5, ferner umfassend das Initialisieren des zweiten Speichers durch Setzen des Zeigers, des Kopierzeigers und des Freigabezeigers auf einen Anfangsort im zweiten Speicher, wobei vorzugsweise
das Initialisieren des zweiten Speichers ferner das Auslösen des autonomen Kopierens umfasst, und
der zweite Speicher einen ersten Datenblock und einen letzten Datenblock beinhaltet, und Inkrementieren eines beliebigen des Zeigers, des Kopierzeigers und des Freigabezeigers, nachdem der letzte Datenblock des zweiten Speichers zu dem ersten Datenblock des zweiten Speichers vorrückt; und/oder
ferner umfassend:
Bestimmen, ob eine Bedingung für das automatische Kopieren erfüllt ist, basierend auf dem Kopierzeiger und dem Freigabezeiger, und
als Reaktion auf das Bestimmen, dass eine Bedingung für das automatische Kopieren erfüllt ist, Auslösen des autonomen Fertigstellens.

7. Verfahren nach einem der Ansprüche 1 bis 6, ferner umfassend:
a) als Reaktion auf das Empfangen eines Wartebefehls, Bestimmen, ob ein Ereignis abgeschlossen ist, und
als Reaktion auf das Bestimmen, dass das Ereignis abgeschlossen ist, Beenden des autonomen Kopierens; und/oder
b) autonomes Kopieren eines oder mehrerer der Vielzahl von Datenblöcken in dem zweiten Speicher in entsprechende Datenblöcke in dem ersten Speicher,
Empfangen eines Befehls zum Schreiben von Daten in den zweiten Speicher,
als Reaktion auf das Empfangen des Befehls zum Schreiben in den zweiten Speicher, Erhalten des Zeigers, der eine Adresse eines Datenblocks in dem zweiten Speicher angibt, der verfügbar ist, um neue Daten zu speichern, und
Schreiben der Daten als die neuen Daten in den Datenblock basierend auf dem Zeiger.

8. System (100), umfassend:
einen internen Speicher (110); und
einen oder mehrere Prozessoren (120), die konfiguriert sind, um über den internen Speicher (110) auf einen externen Speicher (140) zuzugreifen, wobei der Zugriff auf den externen Speicher (140) mit einer ersten Geschwindigkeit erfolgt und der externe Speicher (140) eine erste Vielzahl von Datenblöcken umfasst, wobei der Zugriff auf den internen Speicher (110) mit einer zweiten Geschwindigkeit erfolgt, die sich von der ersten Geschwindigkeit unterscheidet, und der interne Speicher (110) eine zweite Vielzahl von Datenblöcken umfasst, wobei der eine oder die mehreren Prozessoren (120) konfiguriert sind, um:
autonom einen oder mehrere der Datenblöcke in der Vielzahl von Datenblöcken in dem externen Speicher (140) in entsprechende Datenblöcke in dem internen Speicher (110) zu kopieren;
einen Befehl zum Lesen aus dem internen Speicher (110) zu empfangen;
als Reaktion auf das Empfangen des Befehls zum Lesen aus dem internen Speicher (110), einen Zeiger zu erhalten und die Daten aus einem Datenblock in dem internen Speicher basierend auf dem Zeiger zu erhalten,
**dadurch gekennzeichnet, dass**
der Zeiger eine Adresse des Datenblocks in dem internen Speicher (110) angibt, der aus dem externen Speicher (140) kopierte Daten enthält und für den Zugriff verfügbar ist, und
das Erhalten des Zeigers das Bestimmen umfasst, ob der Datenblock in dem internen Speicher für den Zugriff verfügbar ist.

9. System nach Anspruch 8, wobei die zweite Geschwindigkeit schneller als die erste Geschwindigkeit ist.

10. System nach Anspruch 8 oder 9, wobei der eine oder die mehreren Prozessoren (120) konfiguriert sind, um eine oder mehrere Iterationen von Operationen durchzuführen, die Folgendes umfassen:
Verwenden eines Kopierzeigers, der eine Adresse eines nächsten Datenblocks in dem internen Speicher (110) angibt, der verfügbar ist, um Daten aus dem externen Speicher (140) zu empfangen;
Kopieren von Daten in einem entsprechenden Datenblock der Vielzahl von Datenblöcken in dem externen Speicher (140) in den nächsten Datenblock in dem internen Speicher (110); und
Inkrementieren des Kopierzeigers.

11. System nach Anspruch 10, wobei der eine oder die mehreren Prozessoren (120) konfiguriert sind, um zu bestimmen, ob die eine oder die mehreren Iterationen gestoppt werden sollen, durch:
Bestimmen, ob der Kopierzeiger, der die Adresse des nächsten Datenblocks in dem internen Speicher (110) angibt, der verfügbar ist, um Daten aus dem externen Speicher (140) zu empfangen, einen Freigabezeiger erfüllt oder besteht;
als Reaktion auf das Bestimmen, dass der Kopierzeiger den Freigabezeiger erfüllt oder besteht:
Stoppen der einen oder der mehreren Iterationen; andernfalls
Fortsetzen der einen oder der mehreren Iterationen.

12. System nach Anspruch 11, wobei der eine oder die mehreren Prozessoren (120) ferner konfiguriert sind zum:
Empfangen eines Befehls zum Freigeben des Speichers;
als Reaktion auf das Empfangen des Befehls zum Freigeben des Speichers, Inkrementieren des Freigabezeigers.

13. System nach Anspruch 11 oder 12, wobei der eine oder die mehreren Prozessoren (120) ferner konfiguriert sind, um den internen Speicher (110) durch Setzen des Zeigers, des Kopierzeigers und des Freigabezeigers auf einen Anfangsort im internen Speicher zu initialisieren und das autonome Kopieren auszulösen; und/oder
wobei die Vielzahl von Datenblöcken in dem internen Speicher (110) in einer Datenstruktur angeordnet sind, sodass ein erster Datenblock der Vielzahl von Datenblöcken an einen letzten Datenblock der Vielzahl von Datenblöcken in dem internen Speicher (110) angefügt wird, und der eine oder die mehreren Prozessoren, die einen beliebigen des Zeigers, des Kopierzeigers und des Freigabezeigers inkrementieren, nachdem der letzte Datenblock des internen Speichers den beliebigen des Zeigers, des Kopierzeigers und des Freigabezeigers zu dem ersten Datenblock des internen Speichers (110) vorrückt; und/oder
wobei der eine oder die mehreren Prozessoren (120) ferner konfiguriert sind, um als Reaktion auf das Bestimmen, dass der Kopierzeiger eine Bedingung für das automatische Kopieren erfüllt, das autonome Fertigstellen auszulösen.

14. System nach einem der Ansprüche 8 bis 13, wobei der eine oder die mehreren Prozessoren (120) ferner konfiguriert sind zum:
autonomen Kopieren eines oder mehrerer der Vielzahl von Datenblöcken in dem internen Speicher (110) in entsprechende Datenblöcke in dem externen Speicher (140);
Empfangen eines Befehls zum Schreiben von Daten in den internen Speicher (110);
als Reaktion auf das Empfangen des Befehls zum Schreiben in den internen Speicher (110), Bestimmen des Zeigers, der die Adresse eines Datenblocks in dem internen Speicher (110) angibt, der verfügbar ist, um neue Daten zu speichern; und
Schreiben der Daten als die neuen Daten in den Datenblock basierend auf dem Zeiger.

15. System nach einem der Ansprüche 8 bis 14, wobei der eine oder die mehreren Prozessoren (120) konfiguriert sind, um den Zeiger aufrechtzuerhalten, der eine Adresse eines Datenblocks in dem internen Speicher (110) angibt, der aus dem externen Speicher (140) kopierte Daten enthält und für den Zugriff verfügbar ist, wobei ein/der Kopierzeiger eine Adresse eines nächsten Datenblocks in dem internen Speicher (110) angibt, der verfügbar ist, um Daten aus dem externen Speicher (140) zu empfangen, und ein/der Freigabezeiger eine Adresse eines letzten Datenblocks in dem internen Speicher (110) angibt, der verfügbar ist, um Daten aus dem externen Speicher (140) zu empfangen; und/oder
wobei die Vielzahl von Datenblöcken in dem internen Speicher (110) logisch in einer Reihenfolge angeordnet sind, wobei ein letzter Datenblock in dem internen Speicher (110) auf einen ersten Datenblock in dem internen Speicher (110) verweist, sodass das Inkrementieren des Zeigers, der den letzten Datenblock in dem internen Speicher (110) angibt, dazu führt, dass der Zeiger den ersten Datenblock in dem internen Speicher (110) angibt.

## Revendications

1. Procédé de gestion d'accès à une première mémoire par l'intermédiaire d'une seconde mémoire, l'accès à la première mémoire étant à une première vitesse et la première mémoire comprenant une première pluralité de blocs de données, l'accès à la seconde mémoire étant à une seconde vitesse, différente de la première vitesse, et la seconde mémoire comprenant une seconde pluralité de blocs de données, le procédé comprenant :
la copie autonome de données à partir d'un ou plusieurs des blocs de données dans la première pluralité de blocs de données dans la première mémoire vers un ou plusieurs des blocs de données correspondants dans la seconde pluralité de blocs de données dans la seconde mémoire (402) ;
la réception d'une commande de lecture à partir de la seconde mémoire (404) ;
en réponse à la réception de la commande de lecture à partir de la seconde mémoire, l'obtention d'un pointeur ; et
l'obtention des données à partir du bloc de données sur la base du pointeur (406),
**caractérisé en ce que**
les données sont copiées de manière autonome à partir des un ou plusieurs des blocs de données dans la première mémoire vers les un ou plusieurs des blocs de données correspondants dans la seconde mémoire séquentiellement,
le pointeur indique une adresse d'un bloc de données dans la seconde mémoire qui contient des données copiées à partir de la première mémoire et qui est disponible en premier pour l'accès, et
l'obtention du pointeur comprend la détermination si le bloc de données dans la seconde mémoire est disponible pour l'accès.

2. Procédé selon la revendication 1, dans lequel la seconde vitesse est plus rapide que la première vitesse ; et/ou
dans lequel la seconde mémoire est une mémoire interne qui est directement connectée à un ou plusieurs processeurs et la première mémoire est une mémoire externe qui n'est pas directement connectée aux un ou plusieurs processeurs.

3. Procédé selon la revendication 1 ou 2, dans lequel la copie autonome comprend la réalisation d'une ou plusieurs itérations d'opérations comprenant :
l'utilisation d'un pointeur de copie indicatif d'une adresse d'un bloc de données suivant dans la seconde mémoire qui est disponible pour recevoir des données à partir de la première mémoire ;
la copie de données à partir de l'un de la première pluralité de blocs de données dans la première mémoire vers le bloc de données suivant dans la seconde mémoire ; et
l'incrémentation d'une valeur du pointeur de copie.

4. Procédé selon la revendication 3, dans lequel la copie autonome comprend en outre la détermination s'il faut arrêter les une ou plusieurs itérations, par :
la détermination si le pointeur de copie indiquant l'adresse du bloc de données suivant dans la seconde mémoire qui est disponible pour recevoir des données à partir de la première mémoire est à une adresse indiquée par un pointeur de libération ;
en réponse à la détermination que le pointeur de copie indique l'adresse qui est à l'adresse indiquée par le pointeur de libération, l'arrêt des une ou plusieurs itérations ; et
en réponse à la détermination que le pointeur de copie indique l'adresse qui n'est pas à l'adresse indiquée par le pointeur de libération, la poursuite des une ou plusieurs itérations.

5. Procédé selon la revendication 4, comprenant en outre :
en réponse à la réception de la commande de libération de la seconde mémoire, l'incrémentation du pointeur de libération.

6. Procédé selon la revendication 4 ou 5, comprenant en outre l'initialisation de la seconde mémoire en réglant le pointeur, le pointeur de copie et le pointeur de libération à un emplacement initial dans la seconde mémoire, dans lequel de préférence
l'initialisation de la seconde mémoire comprend en outre le déclenchement de la copie autonome, et
la seconde mémoire comprend un premier bloc de données et un dernier bloc de données, et l'incrémentation de l'un quelconque du pointeur, du pointeur de copie et du pointeur de libération après que le dernier bloc de données de la seconde mémoire a avancé vers le premier bloc de données de la seconde mémoire ; et/ou
comprenant en outre :
la détermination si une condition d'autocopie est satisfaite sur la base du pointeur de copie et du pointeur de libération, et
en réponse à la détermination qu'une condition d'autocopie est satisfaite, le déclenchement de l'adaptation autonome.

7. Procédé selon l'une quelconque des revendications 1 à 6, comprenant en outre :
a) en réponse à la réception d'une commande d'attente, la détermination si un événement est terminé, et
en réponse à la détermination que l'événement est terminé, l'arrêt de la copie autonome ; et/ou
b) la copie autonome d'un ou plusieurs de la pluralité de blocs de données dans la seconde mémoire vers des blocs de données correspondants dans la première mémoire,
la réception d'une commande d'écriture de données dans la seconde mémoire,
en réponse à la réception de la commande d'écriture dans la seconde mémoire, l'obtention du pointeur indiquant une adresse d'un bloc de données dans la seconde mémoire qui est disponible pour stocker de nouvelles données, et
l'écriture des données en tant que nouvelles données dans le bloc de données sur la base du pointeur.

8. Système (100) comprenant :
une mémoire interne (110) ; et
un ou plusieurs processeurs (120) configurés pour accéder à une mémoire externe (140) par l'intermédiaire de la mémoire interne (110), l'accès à la mémoire externe (140) étant à une première vitesse et la mémoire externe (140) comprenant une première pluralité de blocs de données, l'accès à la mémoire interne (110) étant à une seconde vitesse, différente de la première vitesse, et la mémoire interne (110) comprenant une seconde pluralité de blocs de données, les un ou plusieurs processeurs (120) étant configurés pour :
copier de manière autonome un ou plusieurs des blocs de données dans la pluralité de blocs de données dans la mémoire externe (140) vers des blocs de données correspondants dans la mémoire interne (110) ;
recevoir une commande de lecture à partir de la mémoire interne (110) ;
en réponse à la réception de la commande de lecture à partir de la mémoire interne (110), obtenir un pointeur et obtenir les données à partir d'un bloc de données dans la mémoire interne sur la base du pointeur,
**caractérisé en ce que**
le pointeur indique une adresse du bloc de données dans la mémoire interne (110) qui contient des données copiées à partir de la mémoire externe (140) et qui est disponible pour l'accès, et
l'obtention du pointeur comprend la détermination si le bloc de données dans la mémoire interne est disponible pour l'accès.

9. Système selon la revendication 8, dans lequel la seconde vitesse est plus rapide que la première vitesse.

10. Système selon la revendication 8 ou 9, dans lequel les un ou plusieurs processeurs (120) sont configurés pour réaliser une ou plusieurs itérations d'opérations comprenant :
l'utilisation d'un pointeur de copie indicatif d'une adresse d'un bloc de données suivant dans la mémoire interne (110) qui est disponible pour recevoir des données à partir de la mémoire externe (140) ;
la copie de données dans un bloc de données correspondant de la pluralité de blocs de données dans la mémoire externe (140) vers le bloc de données suivant dans la mémoire interne (110) ; et
l'incrémentation du pointeur de copie.

11. Système selon la revendication 10, dans lequel les un ou plusieurs processeurs (120) sont configurés pour déterminer s'il faut arrêter les une ou plusieurs itérations, par :
la détermination si le pointeur de copie indiquant l'adresse du bloc de données suivant dans la mémoire interne (110) qui est disponible pour recevoir des données à partir de la mémoire externe (140) satisfait ou passe un pointeur de libération ;
en réponse à la détermination que le pointeur de copie satisfait ou passe le pointeur de libération :
l'arrêt des une ou plusieurs itérations ; sinon
la poursuite des une ou plusieurs itérations.

12. Système selon la revendication 11, dans lequel les un ou plusieurs processeurs (120) sont en outre configurés pour :
recevoir une commande de libération de mémoire ;
en réponse à la réception de la commande de libération de mémoire, l'incrémentation du pointeur de libération.

13. Système selon la revendication 11 ou 12, dans lequel les un ou plusieurs processeurs (120) sont en outre configurés pour initialiser la mémoire interne (110) en réglant le pointeur, le pointeur de copie et le pointeur de libération à un emplacement initial dans la mémoire interne, et pour déclencher la copie autonome ; et/ou
dans lequel la pluralité de blocs de données dans la mémoire interne (110) sont agencés dans une structure de données de sorte qu'un premier bloc de données de la pluralité de blocs de données s'ajoute à un dernier bloc de données de la pluralité de blocs de données dans la mémoire interne (110), et les un ou plusieurs processeurs incrémentant l'un quelconque du pointeur, du pointeur de copie et du pointeur de libération après que le dernier bloc de données de la mémoire interne a avancé l'un quelconque du pointeur, du pointeur de copie et du pointeur de libération vers le premier bloc de données de la mémoire interne (110) ; et/ou
dans lequel les un ou plusieurs processeurs (120) sont en outre configurés, en réponse à la détermination que le pointeur de copie satisfait une condition d'autocopie, pour déclencher l'adaptation autonome.

14. Système selon l'une quelconque des revendications 8 à 13, dans lequel les un ou plusieurs processeurs (120) sont en outre configurés pour :
copier de manière autonome un ou plusieurs de la pluralité de blocs de données dans la mémoire interne (110) vers des blocs de données correspondants dans la mémoire externe (140) ;
recevoir une commande d'écriture de données dans la mémoire interne (110) ;
en réponse à la réception de la commande d'écriture dans la mémoire interne (110), déterminer le pointeur indiquant l'adresse d'un bloc de données dans la mémoire interne (110) qui est disponible pour stocker de nouvelles données ; et
écrire les données en tant que nouvelles données dans le bloc de données sur la base du pointeur.

15. Système selon l'une quelconque des revendications 8 à 14, dans lequel les un ou plusieurs processeurs (120) sont configurés pour maintenir le pointeur indiquant une adresse d'un bloc de données dans la mémoire interne (110) qui contient des données copiées à partir de la mémoire externe (140) et qui est disponible pour l'accès, un/le pointeur de copie indiquant une adresse d'un bloc de données suivant dans la mémoire interne (110) qui est disponible pour recevoir des données à partir de la mémoire externe (140), et un/le pointeur de libération indiquant une adresse d'un dernier bloc de données dans la mémoire interne (110) qui est disponible pour recevoir des données à partir de la mémoire externe (140) ; et/ou
dans lequel la pluralité de blocs de données dans la mémoire interne (110) sont agencés logiquement dans un ordre, dans lequel un dernier bloc de données dans la mémoire interne (110) fait référence à un premier bloc de données dans la mémoire interne (110) de sorte que l'incrémentation du pointeur indiquant le dernier bloc de données dans la mémoire interne (110) a pour résultat le pointeur indiquant le premier bloc de données dans la mémoire interne (110).
